**Europäisches Patentamt**

(19) **European Patent Office**

**Office européen des brevets**

(11) Veröffentlichungsnummer: **0 056 828**

**A2**

(12) # EUROPÄISCHE PATENTANMELDUNG

(21) Anmeldenummer: **81100518.0**

(22) Anmeldetag: **24.01.81**

(51) Int. Cl.³: **B 62 D 33/06**

(43) Veröffentlichungstag der Anmeldung:
**04.08.82** Patentblatt **82/31**

(84) Benannte Vertragsstaaten:
**AT BE FR GB LU NL SE**

(71) Anmelder: **CIAS AG**
**Bahnhofstrasse 28**
**CH-6301 Zug(CH)**

(72) Erfinder: **Bailey, Peter**
**Silverhill Barkway**
**Royston Herts. SG8 9EB(GB)**

(72) Erfinder: **Warner, Peter**
**The Croft High Street**
**Clophill, Beds.(GB)**

(72) Erfinder: **Jackson, Peter**
**Erin House Church Street**
**Woodhurst Cambs. PE17 3BN(GB)**

(72) Erfinder: **Chambers, Richard J.M.**
**Dahlienweg 14**
**D-8011 Heimstetten(DE)**

(74) Vertreter: **Helms, Joachim, Dipl.-Ing.**
**Nymphenburger Strasse 81**
**D-8000 München 19(DE)**

(54) **Starre Leichtbau-Allwetterkabine für offene Geländefahrzeuge.**

(57) Starre Leichtbau-Allwetterkabine für offene Geländefahrzeuge mit einem sich vor dem Fahrersitz quer über das Fahrzeug nach oben erstreckenden Windschutzscheibenrahmen, einem Fahrzeugboden mit sich hinter dem Fahrersitz nach oben erstreckenden Chassis-Seitenwänden und eine sich zwischen den Hinterkanten der Chassis-Seitenwänden erstreckenden Ladeöffnung. Der Oberteil der Kabine weist eine Dachschale mit seitlichen zum Eingriff mit entsprechenden oberen Kanten der Allwetterkabinenseitenwandteilen geeigneten seitlichen Rahmenteilen, einer zum Eingriff mit einer oberen Kante des Windschutzscheibenrahmen geeigneten vorderen Kante und einer hinteren Kante auf. Die linke und rechte Allwetterkabinenseitenwand haben jeweils eine untere Kante, die mit einer Chassis-Seitenwand zusammenpaßt und eine obere Kante, die mit einem seitlichen Rahmenabschnitt der Dachschale zusammenpaßt und eine hintere Kante. Ein allgemein rechtwinkliger Metallrahmen ist in der Ladeöffnung befestigt Der Metallrahmen hat ein unteres sich quer über die Ladeöffnung und an dem Boden des Chassis befestigtes Querelement, vertikale an der hinteren Kante der Chassis-Seitenwand und der hinteren Kante der Kabinenseitenwand befestigte Seitenteile und ein oberes Querteil zur Abstützung der hinteren Dachkante. Der Teilrahmen begrenzt eine hintere Einstiegsöffnung, die mittels einer Tür verschlossen ist.

FIG.3

CIAS AG, Zug, Schweiz

## Starre Leichtbau-Allwetterkabine für offene Geländefahrzeuge

Die Erfindung bezieht sich auf eine starre Leichtbau-Allwetterkabine für offene Geländefahrzeuge mit einem sich vor dem Fahrersitz quer über das Fahrzeug nach oben erstreckenden Windschutzscheibenrahmen, einem Fahrzeugboden mit sich hinter dem Fahrersitz nach oben erstreckenden Chassis-Seitenwänden und einer sich zwischen den Hinterkanten der Chassis-Seitenwänden erstreckenden Ladeöffnung.

Geländefahrzeuge, insbesondere Geländefahrzeuge zur Beförderung von Personen, haben je nach Verwendungszweck eine fest mit dem Chassis verbundene Fahrgastkabine oder ein zusammenfaltbares Verdeck. Es sind weiter Fahrgastkabinen bekannt, die aus einzelnen Kunststoffteilen bestehen, die zusammengebaut und nach Enfernen des zusammenfaltbaren Verdecks an dem Geländefahrzeug befestigt werden.

Gewöhnlich wurden Geländefahrzeuge bisher sehr stabil konstruiert, insbesondere wiesen sie einen torsionsbeständigen Körper auf, um den harten Bedingungen im Gelände zu genügen. Für derartige Fahrzeuge ist es bekannt, eine Allwetterfahrgastkabine vorzusehen, die einen vergleichsweise stabilen Aufbau aufweist. Eine derartige starre Allwetterkabine ist jedoch in nachteiliger Weise sehr schwer und erfordert dementsprechend eine höhere Antriebskraft des Fahrzeugs mit dementsprechenden höheren Treibstoffverbrauch.

Um den Treibstoffverbrauch und die Fahrzeugkosten zu vermindern, ist es erforderlich das Gewicht des Geländefahrzeugs zu vermindern. Dies wird mittels einer Leichtbaukonstruktion in Form eines selbsttragenden Fahrzeugchassis erreicht, einer Technik, die für andere Personenfahrzeuge gut bekannt ist. Eine selbsttragende Fahrzeugkonstruktion dieser Art hat jedoch nicht die erforderliche Torsionssteifheit. Dies ist bei Verwendung eines gewöhnlich bei derartigen Fahrzeugen vorgesehenen Faltdachs kein Nachteil, da das flexible Faltdach die Verdrehung des Chassis beim Betrieb im Gelände aufnimmt.

Wird jedoch das Faltdach durch eine starre Fahrgastkabine ersetzt, so entstehen auf Grund der Starrheit einer derartigen Kabine auf Grund der Verdrehung des Chassis Probleme.

Es ist möglich,dieses Problem dadurch zu lösen, daß man die Fahrgastkabine so stabil ausbildet, daß sie, wenn sie zusammengebaut und an dem Fahrzeug befestigt ist, der gesamten Konstruktion eine derartige Steifigkeit verleiht, daß irgendeine Verdrehung verhindert wird. Eine starre Fahrgastkabine dieser Art erfordert jedoch eine außerordentliche Konstruktion mit dem entsprechenden Materialbedarf und ist somit teuer. Weiter kann eine derartige Fahrgastkabine auf Grund ihres Gewichts nicht leicht an dem Fahrzeug von einer einzigen Person befestigt werden.

Geländefahrzeuge dieser Art weisen normalerweise eine Grundfläche oder Ladefläche mit kurzen sich hinter dem Fahrersitz nach oben erstreckenden Seitenwänden auf, die an ihren hinteren Kanten eine Ladeöffnung ausbilden, die mittels einer nach unten schwenkbaren Ladeklappe verschließbar ist. Wenn die Ladeklappe verschlossen ist, schafft sie einen aureichenden Widerstand gegen ein Verdrehen des hinteren Teils des Fahrzeugchassis. Will man jedoch eine Fahrgastkabine mit Seitenwänden, die sich über die Chassisseitenwände nach oben erstrecken und mit einer hinteren Tür, die sich von der Grundfläche zur hinteren Kante des Kabinendachs erstreckt mit dem Fahrzeug verbinden, so neigt ein Leichtbaufahrzeug dieser Art mit einer relativ flexiblen Fahrgastkabine dazu, sich während dem Betrieb im Gelände zu verdrehen. Entsprechend neigt die mittels der Tür verschlossene hintere Einstiegsöffnung zu einer Änderung ihrer Form, wodurch die Tür unerwünschten Beanspruchungen unterworfen wird, und wodurch ein Türverschluß erforderlich ist, der die Tür auch dann geschlossen hält, wenn sich die hintere Einstiegsöffnung auf Grund der Verwindung in ihrer Form ändert.

Es sind weiter Allwetterkabinen für Geländefahrzeuge bekannt. Beispielsweise zeigt die DE-OS 24 18 259 eine Allwetterkabine für eine Baumaschine und Traktoren, die eine einstückige Dachschale aufweist, die von einem Dachrahmen umgeben ist. Die Kabine hat Seitenwände und eine hintere Wand, die an dem Dachrahmen befestigt sind und weist vordere seitliche Einstiegsöffnungen mit angelenkten Türen auf. Eine derartige Kabine löst nicht das Problem ein geeignetes Kabinendach für ein Leichtbau-Geländefahrzeug der oben beschriebenen Art zu schaffen.

Es ist daher Aufgabe der vorliegenden Erfindung eine relativ starre Leichtbau-Allwetterkabine der eingangs genannten Art zu schaffen, die an einem Leichtbau-Geländefahrzeug mit selbsttragender Karosserie befestigt werden kann.

Diese Aufgabe wird durch die kennzeichnenden Merkmale des Anspruchs 1 gelöst. D. h., erfindungsgemäß ist ein allgemein rechtwinkliger Metallrahmen vorgesehen, der in der Ladeöffnung des Fahrzeugs befestigt wird, wenn die Ladeklappe entfernt ist. Der Metallrahmen begrenzt eine Eintrittsöffnung zwischen der hinteren Kante des Kabinendachs und der hinteren Kante der Grundfläche und zwischen den hinteren Kanten der Chassis-Seitenwände. Auf Grund der Festigkeit des Metallrahmens weist die hintere Einstiegsöffnung bestimmte Abmessungen auf, die sich nicht wesentlich beim Verwinden des Fahrzeugschassis während dem Betrieb im Gelände verändern; d. h., es kann eine Leichtbautür in der hinteren Einstiegsöffnung befestigt werden. Die Tür kann an einem Rahmen befestigt werden, der wiederum an an den hinteren Enden einer Chassis-Seitenwand befestigten Halterungen angelenkt ist, wobei derartige Halterungen normalerweise für eine schwenkbare Ersatzreifenbefestigung vorgesehen sind.

Wenn der Metallrahmen richtig angeordnet ist, werden die linke und rechte Kabinenseitenwand an den Chassis-Seitenwänden befestigt, die mit ihren hinteren Kanten an dem Metallrahmen befestigt werden. Darauf wird dann eine Dachschale über den Seitenwänden angeordnet, wobei die seitlichen Seitenkanten der Dachschale mit den oberen Kanten der Kabinenseitenwänden in Eingriff kommen, und wobei die vordere und hintere Dachkante von dem Windschutzscheibenrahmen des Fahrzeugs und dem rechtwinkligen Metallrahmen abgestützt und dort befestigt werden. Dann wird eine Tür an einem Rahmen befestigt, der an einer der Chassis-Seitenwänden schwenkbar befestigt ist, wobei die Tür die hintere Einstiegsöffnung verschließt.

Die erfindungsgemäße Allwetterkabine umfaßt somit eine Anzahl von einzelnen Bauteilen, die in Leichtbauweise ausgeführt sind, sodaß das Fahrzeuggewicht nicht wesentlich gesteigert wird, und wodurch die Allwetterkabine leicht an dem Fahrzeug befestigt werden kann. Die erfindungsgemäße Allwetterkabine ist ausreichend starr in der Zone der hinteren Einstiegsöffnung, sodaß die Tür und das Türschloß nicht übermäßigen Beanspruchungen ausgesetzt werden, wenn sich das Fahrzeug-Chassis während dem Betrieb im Gelände verwindet; gleichzeitig sind die Kabinenseitenwänden und die Dachschale bzw. Dachhaut ausreichend flexibel, sodaß die gesamte Allwetterkabinenkonstruktion die Verwindung des Fahrzeug-Chassis aufnimmt.

Ein Ausführungsbeispiel der Erfindung ist in der Zeichnung dargestellt und wird im folgenden näher beschrieben.

Es zeigen:

Fig. 1:     eine perspektivische Explosionsansicht der Allwetterkabine;

Fig. 2:     eine Rückansicht des Fahrzeugs mit dem rechtwinkligen an seiner Stelle befestigten Metallrahmen, wobei die Kabinenseitenwände und die Dachschale in einer schematischen Explosionsschnittansicht längs der Linie II-II von Fig. 1 dargestellt sind;

Fig. 3:     eine perspektivische Rückansicht des Fahrzeugs, wobei die Allwetterkabine an dem Fahrzeug befestigt ist;

Fig. 4:     eine perspektivischen Ansicht der rechten vorderen Kante der an dem Fahrzeug be-festigten Allwetterkabine, wobei die Be-festigungselemente zur Befestigung der

vorderen Dachkanten an dem Windschutzscheibenrahmen in Explosionsansicht
dargestellt sind;

Fig. 5 A
und 5 B:     getrenntevordere und hintere Dachschalenteile einer weiteren Ausführungsform
des Kabinendachs;

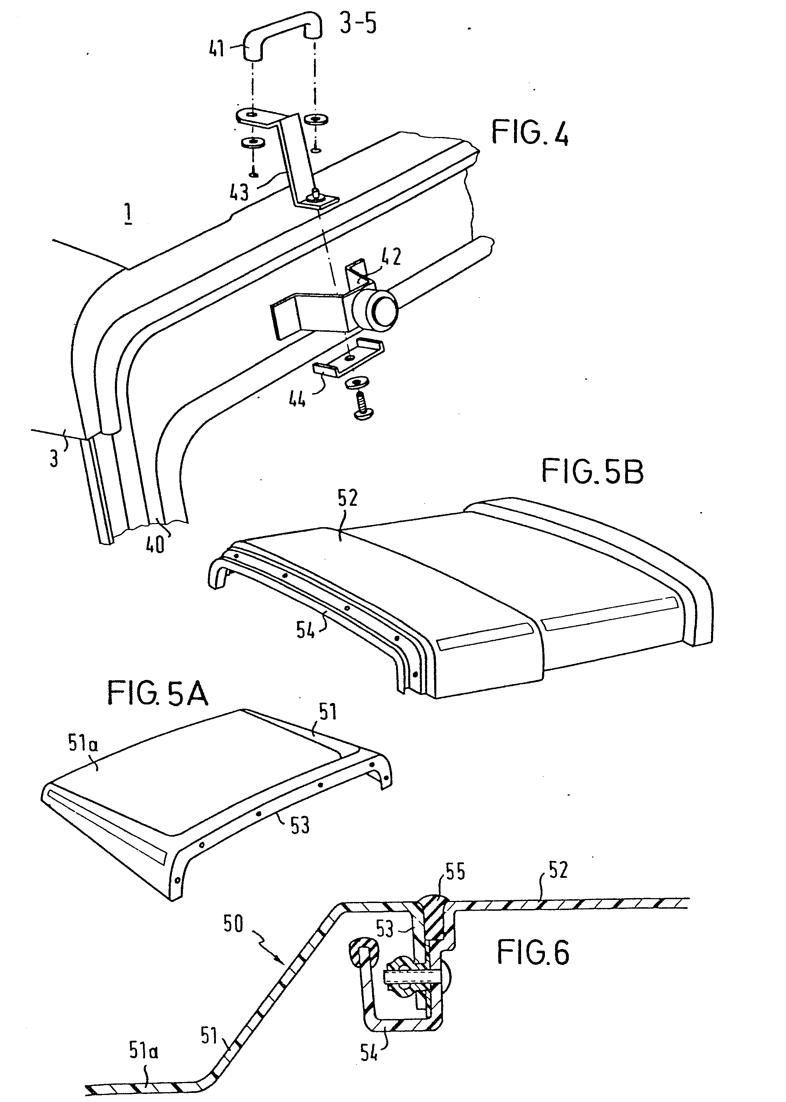

Fig. 6:     eine Teilschnittansicht der Dachschale
von Fig. 5 A und Fig. 5 B zur Darstellung der Verbindung der Dachschalenteile;

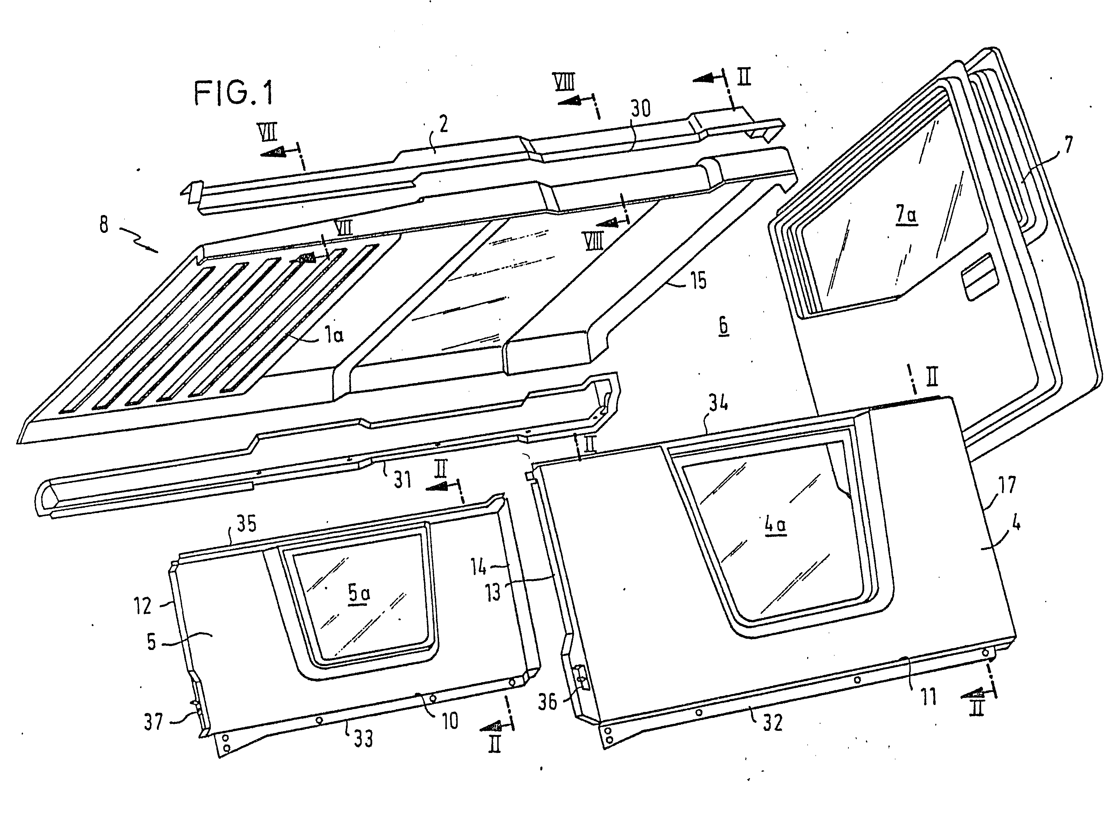

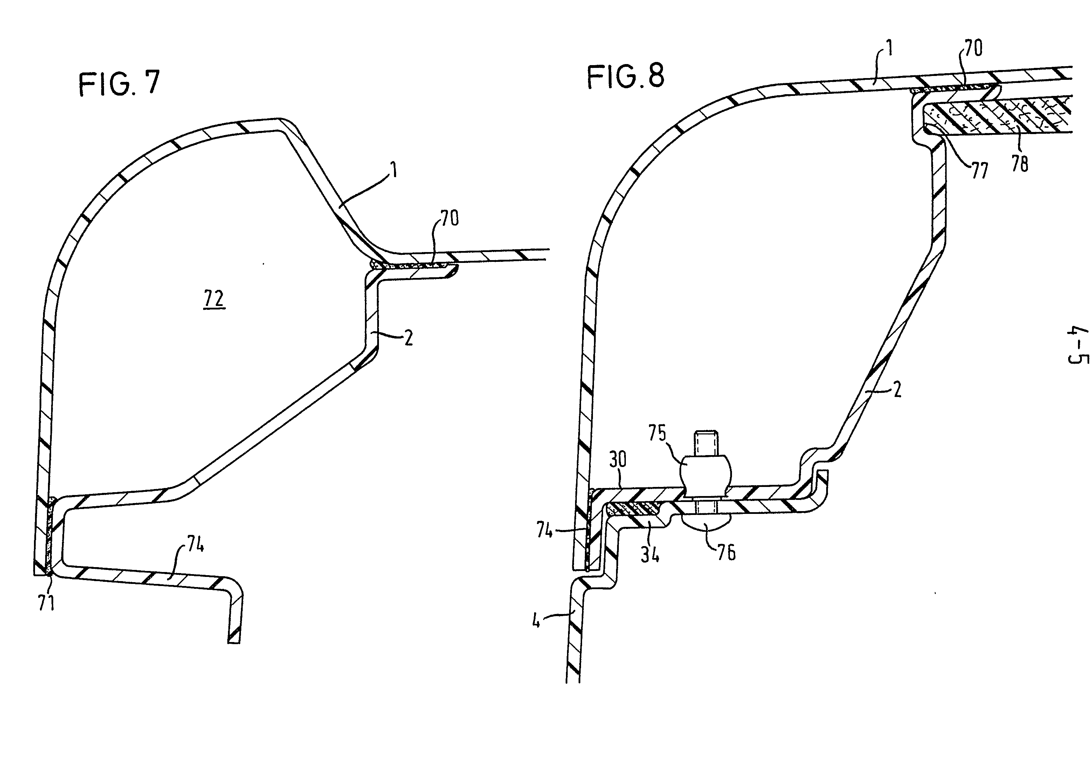

Fig. 7:     eine schematische Teilschnittansicht des
zusammengesetzten Kabinendachs, längs
der Linie VII-VII von Fig. 1;

Fig. 8:     eine schematische Teilschnittansicht des
zusammengesetzten Kabinendachs längs
der Linie VIII-VII von Fig. 1;

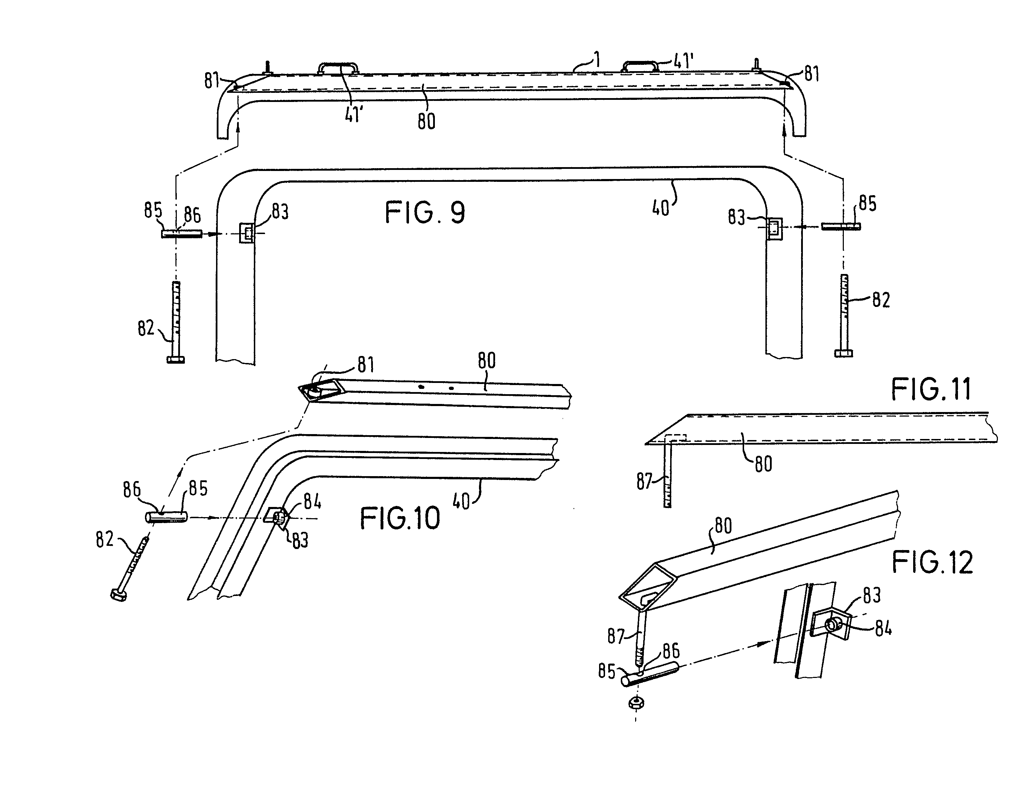

Fig. 9:     eine Teilexplosionsansicht einer weiteren
bevorzugten Ausführungsform der Befestigund der Dachvorderkante an dem Windschutzscheibenrahmen;

Fig. 10:     eine perspektivische Explosionsansicht
der Befestigung von Fig. 9;

Fig. 11:     eine Teilansicht einer Abänderung der
Befestigung von Fig. 9; und

Fig. 12:     eine perspektivische Explosionsansicht
der Befestigung von Fig. 11.

Fig. 1 zeigt eine perspektivische Explosionsansicht
eines Kabinendaches 8 mit einer Dachschale bzw. Dachhaut 1 mit getrennt hergestellten seitlichen Rahmenteilen 2, 3. Die seitlichen Rahmenteile 2, 3 werden innerhalb der Seitenkanten der Dachhaut befestigt und weisen
entsprechende untere Flansche 30, 31 an ihren hinteren
Abschnitten auf, die mit entsprechenden oberen Kanten 34, 35 der Kabinenseitenwände 4, 5 in Eingriff bringbar sind. Eine Tür 7 mit einer Außenfläche und vorzugsweise mit einer damit verleimten Innenfläche ist an einer hinteren Einstiegsöffnung 6 des Kabinendaches befestigbar. Die Dachschale 1 weist eine vordere Kante 9 auf, die mit der oberen Kante des Windschutzscheibenrahmens 40 des Fahrzeugs in Eingriff bringbar und daran befestigbar ist und hat weiter eine hintere Kante 15, die vorzugsweise einen nach unten sich ersttreckenden Flansch aufweist.

Die Kabinenseitenteile 4, 5 haben entsprechende untere Kanten 10, 11 mit sich nach unten erstreckenden Flanschen 32, 33, die in die obere Kante der entsprechenden Chassis-Seitenwände passen. Vordere Kanten 13, 12 der Kabinenseitenteile 4, 5 sind so ausgebildet, daß sie mit dem an dem Fahrzeug-Chassis befestigten Kabinentüren 38 zusammenpassen. Die vorderen Kanten 13, 12 können mit geeigneten Anschlagsplatten 36, 37 versehen sein, um mit Türschließelementen (nicht gezeigt) an den Türen 38 in Eingriff zu kommen. Eine hintere Einstiegstür 7 ist an einem Rahmen angeschraubt oder anderweitig befestigt, der wiederum außerhalb des Fahrzeugs angeordnet und schwenkbar an Halterungen an dem hinteren Ende einer der Chassis-Seitenwände befestigt ist, wie dies weiter unten beschrieben wird.

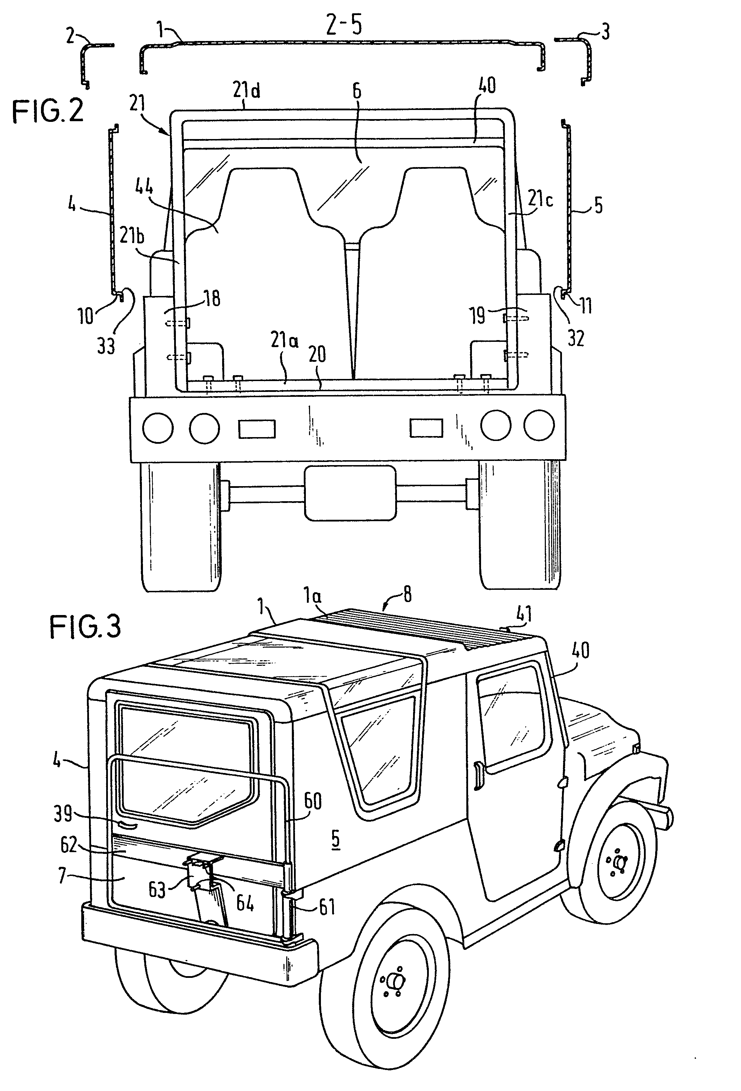

Wie man in Fig. 2 sieht, kann ein allgemein rechtwinkliger Metallrahmen 21 am hinteren Ende des Fahrzeugs befestigt und mit der hinteren Kante der Fahrzeuggrundfläche und an den hinteren Enden 18, 19 der Chassis-Seitenwände mittels Flanschen 21e, 21f am Rahmen 21 innerhalb der Chassis-Seitenwänden verschraubt werden. Der Metallrahmen hat ein unteres Querteil 21a, das sich über die Breite der Ladeöffnung (die Ladeklappe des Fahrzeugs ist entfernt) erstreckt und an der Grundfläche verschraubt ist. Der Metallrahmen weist im allgemeinen vertikale Seitenteile 21b, 21c und ein oberes Querelement 21d auf, daß die oberen Enden der vertikalen Seitenteile 21b, 21c verbindet, und als Träger für die hintere Kante 15 der Dachschale dient. Im oberen Querteil 21d sind Gewindeöffnungen 21g für Schrauben oder andere Befestigungselemente vorgesehen, um das hintere Ende der Dachschale 1 an dem Rahmen 21 zu befestigen. Man sieht, daß der Metallrahmen eine hintere Einstiegsöffnung 6 begrenzt, die torsionsbeständig ist, wenn sich das Fahrzeug-Chassis während des Betriebs im Gelände verwindet. Der rechtwinklige Metallrahmen 21 besteht vorzugsweise aus einem Vierkantrohr, z. B. aus Stahl.

Fig. 2 zeigt die Dachschale 1, seitliche Rahmenteile 2, 3 und Kabinenseitenwände 4,5 in einer Explosionsschnittansicht längs der Linie II-II von Fig. 1. Wie man aus Fig. 2 sieht, sind die unteren Kanten der Kabinenseitenwände 4,5 mit Flanschen 32,33 versehen, die sich ins Innere der Chassis-Seitenwände erstrecken. Diese Flansche 32,33 sind mit Bohrungen versehen. (siehe Fig. 1), sodaß sie an den Chassis-Seitenwänden verschraubt oder anderweitig befestigt werden können. Die seitlichen Rahmenteile 2,3 sind an der Dachschale 1 mittels eines Klebers oder auf sonstige geeignete Weise befestigt, sodaß die Dachschale 1 und die seitlichen Rahmenteile 2,3 eine einstückige Einheit 70 nach unten erstreckenden Flanschen 30,31 ausbilden, die mit den Kabinenseitenwandteilen 4,5 zusammenpassen und sich nach außen erstrecken, um Regenwasser von den Kabinenseitenwänden nach außen abzuleiten. Die Rahmen bzw. "Kastenabschnitte" längs der Dachkanten, die mittels der seitlichen Rahmenteile 2,3 ausgebildet werden, dienen zur Verstärkung des Daches als auch zur Schaffung eines geschlossenen Kanals, durch den elektrische Kabel für einen unter Umständen an der hinteren Türscheibe angeordneten Scheibenwischer, die Fahrzeugbeleuchtung und ähnliches geleitet werden können.

Die Dachschale 1 und die seitlichen Rahmenteile 2,3 werden vorzugsweise aus Kunststoff, z. B. aus glasfaserverstärktem Kunststoff oder irgendeinem anderen geeigneten Material, ausgebildet. Die Dachschale 1 ist vorzugsweise so profiliert, daß sie eine zusätzliche Festigkeit aufweist und ist vorzugsweise mit einem vorderen Abschnitt 1a versehen, der wannenförmig mit Rippen ausgebildet ist und als Gepäckladefläche dient. Die Seitenwände 4,5 und die Tür 7 sind ebenfalls Kunststoffteile und weisen vorzugsweise Fensterscheiben 4a, 5a, 7a auf, die in diesen Teilen in üblicher Weise befestigt sind.

Das zusammengebaute Kabinendach ist in perspektivischer Ansicht in Fig. 3 dargestellt. Zum Zusammenbau der Kabine wird die ursprüngliche Ladeklappe (nicht gezeigt) des Fahrzeugs entfernt. Dann wird ein rechtwinkliger Metallstützrahmen 21 an dem Fahrzeug befestigt, wie dies in Fig. 2 dargestellt ist. Dann wird das Dach angeordnet, wobei seine vordere Kante 9 auf dem Windschutzscheibenrahmen 40 und seine hintere Kante 15 auf dem oberen Querträger 21 d des rechtwinkligen Rahmens 21 ruht. Da die Dachschale 1 profiliert und mit seitlichen Rahmenteilen versehen ist, ist sie sowohl in Längs- als auch in seitlichen Richtungen selbsttragend. Die Seitenwände 4, 5 werden dann an ihren Stellen angeordnet, indem man jede Seite des Daches anhebt, und dann die Seitenwände über den Chassis-Seitenwänden und unter dem Dach anordnet. Die Kabinenseitenwände werden an dem Dach und an den metallenen Fahrzeug-Chassis-Seitenwänden mittels Schrauben oder anderen geeigneten Befestigungen befestigt und die vordere und hintere Dachkante wird an dem Windschutzscheibenrahmen und an dem Metallrahmen 21 , wie weiter unten beschrieben, befestigt.

Die vordere Kante der Dachschale 1 kann an dem Windschutzscheibenrahmen 40 mittels geeigneter Befestigungen (siehe Fig. 4) befestigt werden. Der Windschutzscheibenrahmen 40 ist gewöhnlich mit einer Halterung 42 versehen, die den Rahmen 40 auf der Fahrzeughaube abstützt, wenn der Windschutzscheibenrahmen im Betrieb im Gelände nach vorne umgeklappt ist. Die vordere Kante der Dachschale 1 kann an der Halterung 42 mittels einer Winkelhalterung 43 und einer Halteplatte 44 befestigt werden, die,wie gezeigt, zusammengeschraubt werden. Das obere Ende der Winkelhalterung 43 wird an dem vorderen Abschnitt der Dachschale 1 angeschraubt,wie gezeigt. Vorzugsweise sind Gepäckhalterungslaschen an verschiedenen Stellen der vorderen Zonen 1a der Dachschale 1 vorgesehen; diese Gepäcklaschen können an der Dachschale 1 zusammen mit Befestigungsklammern 43 befestigt sein. (siehe Fig. 4).

Wenn der Metallrahmen, die Dachschale und die Kabinenseitenwände an ihren Stellen angeordnet und befestigt sind, kann die hintere Tür 7 an dem Fahrzeug befestigt werden, wie dies in Fig. 3 dargestellt ist. Die Tür 7 wird an einem allgemeinen rechtwinkligen Rohrrahmen 60 angeschraubt oder anderweitig befestigt. Der Rohrrahmen 60 wird dann schwenkbar an Halterungen 61 befestigt, die an der hinteren Chassis-Seitenwand vorgesehen sind. Die Halterungen 61 sind gewöhnlich für eine

schwenkbare Ersatzreifenhalterung (nicht gezeigt) vorgesehen, die vor der Befestigung des Rahmens 60 entfernt wurde. Der Rahmen 60 weist einen Querträger 62 zum Versteifen und eine Ersatzreifenhalterung 63 mit Schraubenbolzen 64 auf. Die Tür 7 hat vorzugsweise einen äußeren Handgriff 39 und ein Schloß (nicht gezeigt), daß mit einer Anschlagsplatte, die im rechtwinkligen Rahmen 21 angeordnet ist, in Eingriff tritt. Die Tür 7 kann ebenfalls mit einem elektrischen Scheibenwischer 65 in üblicher Weise versehen sein und weist weiter ein Sicherheitslicht an der Kante benachbart zum Schloß auf. Die Energie für die Scheibenwischer und das Licht wird über ein Kabel, das durch den Kastenabschnitt, der mittels des seitlichen Rahmenteils 3 und dem Dach 1 ausgebildet wird und durch einen offenen Raum im Inneren des Kabinendachs benachbart zum Schwenkpunkt der Tür 7 verläuft, gezeigt.

Fig. 5 A, 5 B und 6 zeigen eine andere Ausführungsform der Dachschale. Bei dieser Ausführungsform besteht die Dachschale 50 aus zwei getrennten Teilen, einem vorderen Dachschalenteil 51 und einem hinteren Dachschalenteil 52. Das vordere Dachschalenteil 51 weist vorzugsweise eine einstückig ausgebildete Wanne 51a zur Anordnung von Gepäck auf. Das hintere Dachschalenteil 52 ist so profiliert, daß es selbsttragend ist, wenn die seitlichen Rahmenteile an den entsprechenden oberen Kanten der Kabinenseitenteile 4,5 befestigt werden, und wenn die hintere Kante des hinteren Dachschalenteils 52 an dem Metallrahmen befestigt wird. Das vordere und hintere Dachschalenteil 51, 52 weisen entsprechende zusammenpassende Kanten 53, 54 auf, die, wenn sie in Eingriff gebracht sind und miteinander mit einer dazwischen angeordneten Dichtung 55 (Fig. 6) verschraubt sind, ein wasserdichtes Dach ausbilden. Die vordere zusammenpassende Kante 54 des hinteren Dachschalenteils 52 dient nicht nur zur Abstützung der
hinteren Kante des vorderen Dachschalenteils 51,
sondern dient ebenfalls als Regenablauf, um Wasser
vom Dach zu den Seiten des Fahrzeugs zu leiten.

Wie man aus den Fig. 5A, 5B und 6 sieht, gestattet die
geteilte Konstruktion des Daches, den vorderen Dachschalenteil 51 bei schönem Wetter zu entfernen, ohne
daß das gesamte Kabinendach abgenommen werden muß.
Bei schlechtem Wetter kann der vordere Dachschalenteil 51 leicht wieder über der Zone des Fahrersitzes
44 angeordnet und mit seiner hinteren Kante mit dem
hinteren Dachschalenteil 52 (Fig. 6) verschraubt werden, wobei die vordere Kante in geeigneter Weise mit
der oberen Kante des Windschutzscheibenrahmens 40 befestigt wird.

Fig. 7 zeigt eine schematische Teilschnittansicht des
Kastenabschnitts, der von der zusammengesetzten Dachschale 1 und dem seitlichen Rahmenabschnitt 2 ausgebildet wird, und zwar längs der Linie VII-VII von
Fi.g 1. Der Rahmenabschnitt 2 ist an der Dachschale 1,
an den Zonen 70,71 mittels eines Adhäsivs oder anderen
geeigneten Mitteln befestigt, um einen länglichen Kastenabschnitt 72 auszubilen. Wie man aus Fig. 1 sieht,
verläuft die Linie VII-VII durch die Dachanordnung vor
den Seitenteilen 4,5 in der Zone der Fahrzeugseitentüren 38 (Fig. 3). In dieser Zone haben die Rahmenteile 2,3 sich nach unten erstreckende Flanschabschnitte
74, gegen die die oberen Kanten der Fahrzeugseitentüren 38 im geschlossenen Zustand anschlagen. Die vorderen Kanten der Seitenwände können ebenfalls Flansche
aufweisen, gegen die die Türen 38 im geschlossenen Zustand anschlagen.

Fig. 8 zeigt eine schematische Teilschnittansicht des Kastenabschnitts 72 längs der Linie VIII-VIII von Fig. 1. In dieser Zone weisen die Rahmenteile 2,3 Profile auf, die mit den oberen Kanten 34,35 der Seitenteile 4,5 zusammenpassen. In den Bohrungen in den Rahmenteilen 2,3 können mit Gewinde versehene Einsätze 75 vorgesehen sein, sodaß man Schrauben 76 zum Befestigen der Seitenwände an dem Dach leicht einbringen kann. Weiter können die Rahmenteile 2,3 ein Profil 77 (Fig. 8) aufweisen, um eine Deckenplatte 78 aus akustisch-dämpfenden Material zu halten.

Fig. 9 und 10 zeigen weiter bevorzugte Auführungsformen zur Befestigung des vorderen Endes der Dachschale 1 am Windschutzscheibenrahmen 40. Statt der in Fig. 4 gezeigten Befestigung ist ein Vierkantrohr 80 an der Innenseite der vorderen Kante der Dachhaut 1, beispielsweise mittels Schrauben, die mit den Gepäcklaschen 41 in Eingriff stehen, befestigt. Ein Gewindeeinsatz 81 ist an jedem Ende des Rohres 80 in einer Bohrung zur Aufnahme einer Schraube 82 vorgesehen. Der Windschutzscheibenrahmen 40 weist einen daran angeschweißten Winkel 83 mit einer Bohrung 84 auf, wobei der Winkel 83 normalerweise für das Befestigen des Windschutzscheibenrahmens vorgesehen ist, wenn er im Gelände heruntergeklappt ist. Zur Befestigung des Rohres 80 an der vorderen Dachkante an jeder Seite des Windschutzscheibenrahmens 40 wird ein Metalleinsatz 85 in die Bohrung 84 der Halterung 83 eingesetzt und eine Schraube durch eine seitliche Bohrung 86 in den Einsatz 85 geführt und mit dem Gewindeeinsatz 81 verschraubt.

Fig. 11 und 12 zeigen eine geänderte Ausführungsform der Anordnung der Fig. 9 bis 10, in der der Bolzen 82 und der Einsatz 81 in den Fig. 9 und 10 durch einen Gewindebolzen 87 und eine Mutter 88 ersetzt sind. Der Bolzen 87 hat ein umgebogenes oberes Ende und verläuft nach unten durch eine Bohrung in dem Rohr 80 und durch eine Bohrung 86 in dem Einsatz 85. Es ist verständlich, daß die Anordnungen der Fig. 9 bis 12 eine bessere Abdichtung der vorderen Dachkante mit dem Windschutzscheibenrahmen 40 darstellen, da das Rohr 80 dazu beiträgt, die Form der vorderen Dachkante beizubehalten.

Man sieht, daß der feste Metallrahmen eine hintere Einstiegsöffnung mit starren Abmessungen schafft, die die Verwendung einer Leichtbautür als Einstiegstür gestatten; gleichzeitig sind die Dachschale und die Seitenwände in Leichtbauweise, vorzugsweise aus Kunststoff, ausgeführt, wodurch es möglich ist, daß sich die Kabinenanordnung verbiegen und dadurch die Verwindungen des Fahrzeug-Chassis während des Betriebs im Gelände aufnehmen kann. Auf Grund der Flexibilität des Fahrzeugs wird die Tür 7 vorzugsweise über der Außenseite der hinteren Öffnung statt innerhalb der Öffnung angeordnet.

Die Allwetterkabine gemäß der Erfindung kann leicht von einer einzigen Person zusammengebaut und befestigt werden und bewirkt keine übermäßige Steigerung des Fahrzeuggewichts. Auf Grund des geringen Gewichts und der Modulbauweise der Allwetterkabine ist ein bequemer Versand und eine einfache Lagerung möglich. Weiter gestattet die getrennte Anordnung der Dachschale ein Fahren mit geöffneten Dach bei schönem Wetter und ein einfaches Umwandeln zu einer geschlossenen Kabine bei schlechtem Wetter.

Patentansprüche:

1. Starre Leichtbau-Allwetterkabine für offene Geländefahrzeuge mit einem sich vor dem Fahrersitz quer über das Fahrzeug nach oben erstreckenden Windschutzscheibenrahmen, einem Fahrzeugboden mit sich hinter dem Fahrersitz nach oben erstreckenden .Chassis-Seitenwänden und einer sich zwischen den Hinterkanten der Chassis-Seitenwände erstreckenden Ladeöffnung, g e k e n n z e i c h n e t durch

a) eine Dachschale 1 mit seitlichen zum Eingriff mit entsprechenden oberen Kanten (34,35) der Allwetterkabinenseitenwandteilen (32,33) geeigneten, entsprechenden oberen Kanten (30,31), einer zum Eingriff mit einer oberen Kante des Windschutzscheibenrahmens (40) geeigneten vorderen Kante (9) und einer hinteren Kante (15);

b) linke und rechte Allwetterkabinenseitenteile (4,5) mit jeweils einer mit einer oberen Kante der Chassis-Seitenwände zusammenpassenden unteren Kante (10,11), einer mit einem seitlichen Rahmenteil (2,3) der Dachschale (1) zusammenpassenden oberen Kante (34,35) und einer hinteren Kante (12,13);

c) einen allgemeinen rechtwinkligen Metallrahmen (21) zur Befestigung in der Ladeöffnung und zur Begrenzung einer hinteren Einstiegsöffnung mit einem unteren sich quer über der Ladeöffnung (6) erstreckenden, am Fahrzeugboden befestigten Querteil (21a) allgemein vertikalen, sich vom Boden zur Hinterkante (15) der Dachschale (1) erstreckenden und jeweils an den Hinterkanten (18,19) der Chassis-Seitenwände und der Kabinenseitenwände (4,5) befestigten Seitenteilen (21b,21c) und einem oberen Querteil (21c) zur Abstützung der Hinterkante (15) der Dachschale (1), und

d) eine die mittels des Metallrahmens begrenzt Einstiegsöffnung (6) verschließende Tür (7).

2. Starre Leichtbau-Allwetterkabine nach Anspruch 1, dadurch gekennzeichnet, daß die Kabinenseitenwände (4,5) mit transparenten Fenstern (4a,5a) versehen sind.

3. Starre Leichtbau-Allwetterkabine nach Anspruch 1, dadurch gekennzeichnet, daß der Metallrahmen (21) aus einem metallenen Vierkantrohr gefertigt ist.

4. Starre Leichtbau-Allwetterkabine nach Anspruch 1, dadurch gekennzeichnet, daß die Dachschale (1) als einstückig geformte Schale ausgebildet ist, daß die seitlichen Rahmenabschnitte getrennte, mit entsprechenden Seitenkanten der einstückig geformten Schale verbundenen Rahmenteile (2,3) zur Ausbildung von in Längsrichtung der Dachschale (1) verlaufenden Kastenabschnitten (72) umfassen.

5. Starre Leichtbau-Allwetterkabine nach Anspruch 1, dadurch gekennzeichnet, daß die Dachschale (1) ein abtrennbares, vorderes und hinteres Teil (51, 52) umfaßt, daß die Teile ineinanderpassende Kanten (53,54) aufweisen, wobei eine der ineinanderpassenden Kanten (53,54) einen Ablauf zur seitlichen Wasserabführung von der Dachschale (1) aufweisen, daß mindestens die vordere Kante (54) der hinteren Dachschale (52) selbsttragend ist, wenn die seitlichen Rahmenteile (2,3) auf den entsprechenden oberen Kanten (34,35) der Kabinenseitenwandteile (4,5) aufliegen, wobei das hintere Dachschalenteil (52) an seiner hinteren Kante (15) auf dem Metallrahmen (21) und an seinen seitlichen Kanten (30,31) auf den Kabinenseitenwandteilen (4,5) aufliegt, und wobei das vordere Dachschalenteil (51) normalerweise auf dem Windschutzscheibenrahmen (40) und der vorderen Kante (54) des hinteren Dachschalenteils (52) aufliegt und zum Fahren mit offenem Dach entfernbar ist, ohne daß der verbleibende Dachschalenteil (52) entfernt werden muß.

6.        Starre Leichtbau-Allwetterkabine nach Anspruch 5, dadurch gekennzeichnet, daß der Ablauf einstückig mit dem Dach (8) ausgeformt ist und zur Versteifung des hinteren Dachschalenteils (52) beiträgt.

7.        Starre Leichtbar-Allwetterkabine nach Anspruch 5, dadurch gekennzeichnet, daß das vordere Dachschalenteil (51) einstückig, benachbart zur vorderen Kante mit einer vertieften mittleren Zone (51a) zur Gepäckaufnahme ausgebildet ist.

8.        Starre Leichtbau-Allwetterkabine nach Anspruch 1, dadurch gekennzeichnet, daß die Dachschale (1) einstückig benachbart zur vorderen Kante mit einer vertieften mittleren Zone (1a) zur Gepäckaufnahme ausgebildet ist.

9.        Starre Leichtbau-Allwetterkabine nach Anspruch 7 oder 8, gekennzeichnet durch an der Dachschale (1) in der Zone der vertieften mittleren Zone (1a) befestigte Gepäckbefestigungslaschen (41).

10.       Starre Leichtbau-Allwetterkabine nach Anspruch 1, gekennzeichnet durch einen allgemein rechtwinkligen an der Außenseite der Tür befestigten und
schwenkbar an einer der Seitenwände des Chassis befestigten Rahmen (60) zur Halterung der hinteren Fahrzeugtür (7) und mit Einrichtungen zur Befestigung
eines Reserverades.

FIG.1

0056828

FIG.2

FIG.3

0056828

FIG.4

3-5

41

43

1

42

3

44

40

FIG.5B

52

54

FIG.5A

51

51a

53

55

52

50

53

51

FIG.6

51a

54

FIG. 7

FIG. 8

4-5

0056828

FIG. 9

FIG.10

FIG.11

FIG.12